# EUROPÄISCHE PATENTSCHRIFT

(11) **EP 1 068 107 B1**
(45) Veröffentlichungstag und Bekanntmachung des Hinweises auf die Patenterteilung: **24.09.2003**
(21) Anmeldenummer: 99915463.6
(22) Anmeldetag: 09.02.1999
(51) Int. Cl.: B60R 21/32

(54) **VERFAHREN ZUM ERMITTELN VON STEUERDATEN FÜR DIE AUSLÖSUNG VON RÜCKHALTEMITTELN IN EINEM FAHRZEUG VOR DEM AUFPRALL**
METHOD FOR DETERMINING CONTROL DATA FOR DEPLOYING RESTRAINT ELEMENTS IN A VEHICLE PRIOR TO A COLLISION
PROCEDE POUR LA DETERMINATION DE DONNEES DE COMMANDE POUR LE DECLENCHEMENT D'ORGANES DE RETENUE DANS UN VEHICULE AVANT L'IMPACT

(30) Priorität: 03.04.1998 DE 19815002
(43) Veröffentlichungstag der Anmeldung: 17.01.2001
(73) Patentinhaber: ROBERT BOSCH GMBH, 70442 Stuttgart (DE)
(72) Erfinder: HERRMANN, Thomas, D-82131 Gauting (DE)
(86) Internationale Anmeldenummer: DE9900330
(87) Internationale Veröffentlichungsnummer: WO99051467

(56) Entgegenhaltungen:
- EP-A- 0 882 624
- DE-A- 4 442 189
- DE-C- 3 922 085
- US-A- 3 760 414

## Beschreibung

### Stand der Technik

Die vorliegende Erfindung betrifft ein Verfahren zum Ermitteln von Steuerdaten für die Auslösung von Rückhaltemitteln in einem Fahrzeug, wobei zwischen zwei benachbarten Fahrzeugen Informationen übertragen werden, welche im Falle eines Crashes für die Aktivierung der Rückhaltemittel verwendet werden.

Zum Schutz der Fahrzeuginsassen werden künftig eine Vielzahl verschiedener Rückhaltemittel, z.B. Front-Airbags, Seiten-Airbags für den Kopf- und Thoraxbereich, Knie-Airbags, Gurtstraffer usw. im Fahrzeug installiert. Ziel dieser Rückhaltemittel ist es, den Fahrzeuginsassen bei möglichst vielen verschiedenen Unfallsituationen einen optimalen Schutz vor Verletzungen zu bieten. Diesem Ziel liefe man zuwider, wenn die Auslösung der Rückhaltemittel unabhängig von verschiedenen Einflußgrößen, wie z.B. Unfallschwere, Kollisionsrichtung, Sitzposition der Fahrzeuginsassen und dergleichen, erfolgen würde. Dann besteht sogar die Gefahr, daß die Rückhaltemittel selbst durch ihr Auslösen den Fahrzeuginsassen Schaden zufügen würden. Daher wird, wie aus dem Konferenzbericht des 3. International Symposium on Sophisticated Car Occupant Savety Systems, Airbag 2000, Karlsruhe, 26., 27.11.1996, Seite 16-1 bis 16-20 hervorgeht, ein "intelligentes" Auslösen der Rückhaltemittel in Abhängigkeit von den genannten Einflußgrößen gefordert.

Es ist bereits üblich, Sitzbelegungssensoren im Fahrzeug vorzusehen, welche erkennen, ob ein Fahrzeugsitz überhaupt belegt ist, und ob bei der augenblicklichen Sitzposition eines Fahrzeuginsassen die Auslösung von Rückhaltemitteln für ihn einen Schutz bringen kann oder eher zu Verletzungen führt. Sensoren für die Sitzbelegungserkennung sind z.B. auf den Seiten 17-1 bis 17-12 des bereits genannten Konferenzberichts beschrieben.

Aus derselben Druckschrift geht auch hervor, daß eine sinnvolle Auslösung von Rückhaltemittel, insbesondere von Seiten-Airbags, nur dann möglich ist, wenn ein bevorstehender Crash vorzeitig erkannt wird. Dazu werden sogenannte Precrash-Sensoren, welche vorzugsweise auf dem Radarprinzip basieren, eingesetzt. Mit Hilfe dieser Precrash-Sensoren kann frühzeitig erkannt werden, aus welcher Richtung der bevorstehende Crash zu erwarten ist, und auch um welches den Crash verursachende Hindernis es sich handelt, z.B. ein sich bewegendes Fahrzeug oder ein starrer Gegenstand.

Aus EP-A-0882624 als einer älteren Patentanmeldung, ist ein Verfahren zum Ermitteln von Steuerdaten für die Auslösung von Rückhaltemitteln in einem Fahrzeug bekannt, wobei vor einem zwischen zwei Fahrzeugen eintretenden Crash jedes Fahrzeug Daten über eigene fahrzeugspezifische Eigenschaften, welche Einfluss auf den Crashverlauf haben können, aussendet. Jedes Fahrzeug empfängt die vom anderen Fahrzeug ausgesendeten fahrzeugspezifischen Daten und leitet daraus Steuerdaten für die Auslösung seiner Rückhaltemittel ab. Aus DE-A-4 442 189 als gattungsbildender Schrift ist ebenfalls ein Verfahren zum Ermitteln von Steuerdaten für die Auslösung von Rückhaltemitteln in einem Fahrzeug bekannt, bei dem vor einem Crash zwischen den Fahrzeugen fahrzeugspezifische Daten ausgetauscht werden, um die Rückhaltemittel entsprechend anzusteuern. Dabei sind die Fahrzeuge mit einem Precrashsensor auf Radarprinzip ausgestattet, und die fahrzeugspezifischen Daten werden diesem Precrashsignal aufmoduliert. Aus DE-A-19520721 ist es bekannt, die Steuerung von Rückhaltemitteln in Abhängigkeit von der Unfallschwere durchzuführen.

Der Erfindung liegt die Aufgabe zugrunde, ein Verbessertes Verfahren zum Ermitteln von Steuerdaten für die Auslösung von Rückhaltemitteln in einem Fahrzeug zu schaffen, wobei die Fahrzeuginsassen immer nach einen optimalen Schutz erfahren.

### Vorteile der Erfindung

Die genannte Aufgabe wird mit den Merkmalen des Anspruchs 1 dadurch gelöst, daß jedes von zwei benachbarten Fahrzeugen an das andere Informationen über eigene fahrzeugspezifische Eigenschaften, welche Einfluß auf einen bevorstehenden Crashverlauf haben können, überträgt. Gemäß der Erfindung werden diese fahrzeugspezifischen Daten auf die Sendesignale von Precrash-Sensoren der Fahrzeuge aufzumodulieren. Dann bräuchten die Fahrzeuge keine eigenen Kommunikationsmittel für diese fahrzeugspezifischen Daten aufzuweisen. Die Sendesignale der Precrash-Sensoren können mit den fahrzeugspezifischen Daten frequenz- oder amplituden- oder phasen- oder pulsweitenmoduliert werden. Als Übertragungsmedium für die Precrash-Sensoren kommen Mikrowellen oder Lichtwellen oder Ultraschallwellen in Frage. Gemäß der Erfindung werden die auf einem Sendesignal aufmodulierten fahrzeugspezifischen Daten von einem Empfänger erst dann demoduliert werden, wenn der jeweilige das Sendesignal empfangende Precrash-Sensor einen Abstand zum anderen Fahrzeug mißt, der unterhalb einer vorgebbaren Schwelle liegt.

Als fahrzeugspezifische Signale können beispielsweise die Fahrzeugmasse und/oder die Struktur des Frontaufbaus und/oder die Karosseriesteifigkeit und/oder der Fahrzeugtyp und/oder die Fahrzeuggeschwindigkeit ausgesendet werden. Wenn nun ein Fahrzeug diese fahrzeugspezifischen Daten des anderen am Crash beteiligten Fahrzeugs übermittelt bekommt, kann es daraus geeignete Steuerdaten für seine Rückhaltemittel ableiten, so daß dementsprechend nur solche Rückhaltemittel in einer solchen zeitlichen Abfolge und mit einer solchen Stärke aktiviert werden, daß die Fahrzeuginsassen bei dem Crash optimal geschützt werden.

### Beschreibung eines Ausführungsbeispiels

Anhand eines in der Zeichnung dargestellten Ausführungsbeispiels wird nachfolgend die Erfindung näher erläutert. Es zeigen:
Figur 1 die Draufsicht auf zwei Fahrzeuge vor einem bevorstehenden Crash und
Figur 2 ein Blockschaltbild eines Precrash-Sensors, über den Steuerdaten für die Auslösung von Rückhaltemitteln übertragen werden.

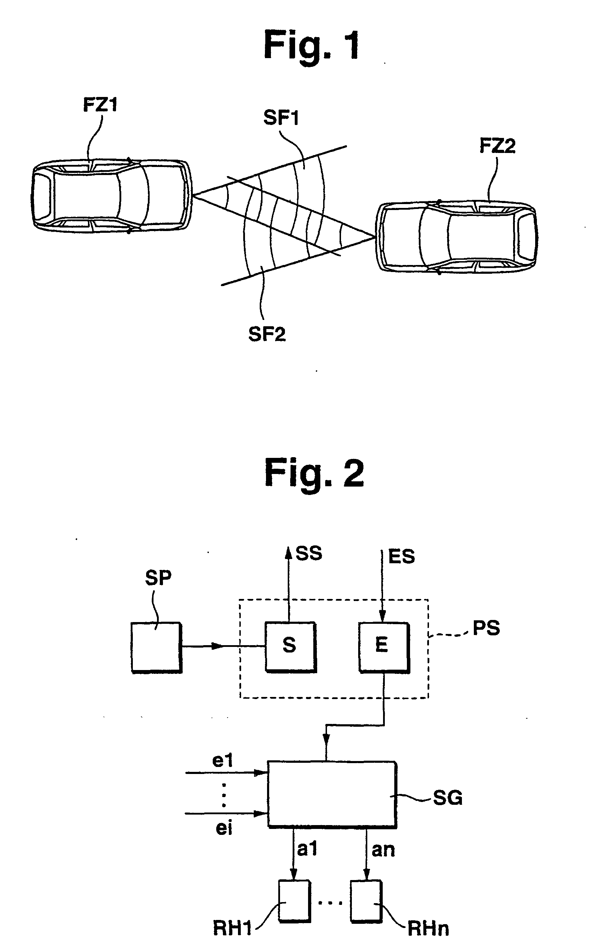

Die Figur 1 zeigt zwei sich frontal aufeinander zubewegende Fahrzeuge FZ1 und FZ2, welche an ihren Frontseiten mit Precrash-Sensoren ausgestattet sind. In der Figur 1 sind die von den Precrash-Sensoren ausgehenden Strahlungsfelder SF1 und SF2 angedeutet. Precrash-Sensoren arbeiten in bekannter Weise nach dem Radarprinzip, nach dem sie ein Sendesignal abstrahlen und das an dem in dem Strahlungsfeld sich befindenden Objekt reflektierte Signal wieder empfangen. Aus Signallaufzeiten oder durch Auswertung von Frequenzspektren über Fast Fourier Transformation können dann Entfernungen von Hindernissen ermittelt werden. Auch können relative Geschwindigkeiten zwischen zwei aufeinander zufahrenden Fahrzeugen aus dem Dopplereffekt bestimmt werden. Aus der Information über den relativen Abstand zwischen zwei Fahrzeugen kann nun hergeleitet werden, ob es in Kürze zu einer Kollision der beiden Fahrzeuge FZ1 und FZ2 kommen wird, so daß dementsprechend Rückhaltemittel zum Schutz der Fahrzeuginsassen aktiviert werden können. Wie die Strahlungsfelder SF1 und SF2 in Figur 1 andeuten, besitzen die Fahrzeuge FZ1 und FZ2 nur an den Frontseiten Precrash-Sensoren. Solche Precrash-Sensoren können aber auch rund um das Fahrzeug herum angeordnet sein, so daß der gesamte Raum um das Fahrzeug herum auf Crash verursachende Hindernisse beobachtet werden kann. Von besonderer Bedeutung sind Precrash-Sensoren an den Fahrzeuglängsseiten, weil sie eine rechtzeitige Auslösung von Seiten-Airbags veranlassen können.

Das Blockschaltbild in Figur 2 zeigt, daß ein Precrash-Sensor PS in einem Fahrzeug einen Sender S und einen Empfänger E aufweist. Der Sender S strahlt in bekannter Weise ein Sendesignal SS aus, das an einem in seinem Strahlungsfeld liegenden Objekt zumindest teilweise reflektiert wird. Das reflektierte Signal gelangt als Empfangssignal ES an einen Empfänger E, in dem eine Signalauswertung stattfindet, aus der sich der relative Abstand des Fahrzeugs gegenüber dem Hindernis ergibt. Beim bekannten FMCW-Radar findet in dem Empfänger E eine Spektralanalyse statt, wobei sich aus der Verschiebung von Spektralanteilen der Abstand zum gegenüberliegenden Hindernis ableiten läßt. Die Abstandsinformation teilt der Empfänger E einem Steuergerät SG mit, das im Falle eines tatsächlich eintretenden Crashes Auslösesignale a1, ..., an an ein oder mehrere Rückhalteeinrichtung RH1, ..., RHn abgibt. Das Steuergerät SG erhält in der Regel noch zusätzliche von anderen Sensoren kommende Eingangssignale e1, ..., ei, die einen Einfluß auf die Auslösung der Rückhalteeinrichtungen RH1, ..., RHn haben.

In einem Speicher SP, der zum Beispiel auch im Steuergerät SG integriert sein kann, sind einige fahrzeugspezifische Daten abgelegt. Zu diesen Daten können z.B. der Fahrzeugtyp, die Fahrzeugmasse, die Struktur des Frontaufbaus, die Karosseriesteifigkeit und andere die Eigenschaften des betreffenden Fahrzeugs beschreibende Größen gehören. In jedem Fall handelt es sich um fahrzeugspezifischen Größen, die einen Einfluß auf den Crash-Verlauf haben können. Diese fahrzeugspezifischen Daten, welche auch die eigene Fahrzeuggeschwindigkeit enthalten können, werden im Sender S auf das Sendesignal SS aufmoduliert, wobei entweder Frequenzmodulation oder Amplitudenmodulation oder Phasenmodulation oder Pulsbreitenmodulation verwendet werden kann. Der Empfänger E des Precrash-Sensors PS eines entgegenkommenden Fahrzeugs nimmt das modulierte Sendesignal SS auf, demoduliert dieses Sendesignal SS und erhält so die fahrzeugspezifischen Daten des anderen Fahrzeugs. Das Steuergerät SG leitet nun aus den empfangenen fahrzeugspezifischen Daten solche Auslösesignale al, ..., an für die Rückhalteeinrichtung RH1, ..., RHn her, die an einen Crash-Verlauf angepaßt sind, der aufgrund der Eigenschaften des anderen Fahrzeugs zu erwarten ist. Nach diesen fahrzeugspezifischen Daten des entgegengekommenen Fahrzeugs richtet sich zum Beispiel die Auswahl der zu aktivierenden Rückhalteeinrichtungen, die zeitliche Abfolge der Auslösungen und auch die Stärke, mit der zum Beispiel die Airbags in ein oder mehreren Stufen aufgeblasen werden.

Während das Sendesignal SS eines jeden Precrash-Sensors laufend mit den fahrzeugspezifischen Daten moduliert wird, wird gemäß der Erfindung die Demodulation im Empfänger E des von einem entgegenkommenden Fahrzeug ausgesendeten Signals erst dann vorgehommen, wenn der Precrash-Sensor PS einen Abstand zum anderen Fahrzeug mißt, der unterhalb einer vorgegebenen Schwelle liegt, bei der man mit großer Sicherheit davon ausgehen kann, daß es zu einer Kollision zwischen den beiden Fahrzeugen kommt.

## Patentansprüche

1. Verfahren zum Ermittlen von Steuerdaten für die Auslösung von Rückhaltemitteln in einem Fahrzeug, wobei vor einem zwischen zwei Fahrzeugen (FZ1, FZ2) eintretenden Crash jedes Fahrzeug (FZ1, FZ2) Daten über eigene fahrzeugspezifische Eigenschaften, welche Einfluß auf den Crash-Verlauf haben können, aussendet, wobei jedes Fahrzeug (FZ1, FZ2) die vom anderen Fahrzeug (FZ1, FZ2) ausgesendeten fahrzeugspezifischen Daten empfängt und daraus Steuerdaten für die Auslösung seiner Rückhaltemittel (RH1, ..., RHn) ableitet, wobei jedes Fahrzeug (FZ1, FZ2) mit mindestens einem auf dem Radarprinzip basierenden Precrash-Sensor (PS) ausgestattet ist, wobei die fahrzeugspezifischen Daten eines jeden Fahrzeugs (FZ1, FZ2) auf das (die) von seinem (seinen) Precrash-Sensor(en) (PS) abgestrahlte(n) Sendesignal (E) aufmoduliert werden, **dadurch gekennzeichnet, dass** die auf einem Sendesignal (SS) aufmodulierten fahrzeugspezifischen Daten von einem Empfänger (E) erst dann demoduliert werden, wenn der jeweils das Sendesignal (SS) empfangende Precrash-Sensor (PS) einen Abstand zum anderen Fahrzeug (FZ1, FZ2) misst, der unterhalb einer vorgegebenen Schwelle liegt.

2. Verfahren nach Anspruch 1, **dadurch gekennzeichnet, dass** der (die) Precrash-Sensor(en) (PS) Mikrowellen oder Lichtwellen oder Ultraschallwellen abstrahlen.

3. Verfahren nach einem der vorhergehenden Ansprüche, **dadurch gekennzeichnet, dass** als fahrzeugspezifische Daten die Fahrzeugmasse und/oder die Struktur des Frontaufbaus und/oder die Karosseriesteifigkeit und/oder der Fahrzeugtyp und/oder die Fahrzeuggeschwindigkeit ausgesendet werden.

4. Verfahren nach einem der Ansprüche 1 bis 3, **dadurch gekennzeichnet, dass** das (die) Sendesignal(e) (SS) des (der) Precrash-Sensors(en) (PS) mit den fahrzeugspezifischen Daten frequenz- oder amplituden- oder phasen- oder pulsweitenmoduliert wird (werden).

## Claims

1. Method for determining control data for triggering restraint means in a vehicle, in which, before a crash occurring between two vehicles (FZ1, FZ2), each vehicle (FZ1, FZ2) emits data on the vehicle's own vehicle-specific properties which can influence the course of the crash, in which each vehicle (FZ1, FZ2) receives the vehicle-specific data emitted by the other vehicle (FZ1, FZ2) and derives control data therefrom for triggering its restraint means (RH1, ..., RHn), in which each vehicle (FZ1, FZ2) is equipped with at least one precrash sensor (PS) which is based on the radar principle and in which the vehicle-specific data of each vehicle (FZ1, FZ2) is modulated onto the transmission signal or signals which is/are emitted by its precrash sensor or sensors (PS), **characterized in that** the vehicle-specific data which is modulated onto a transmission signal (SS) is not demodulated by a receiver (E) until the precrash sensor (PS) which respectively receives the transmission signal (SS) measures a distance from the other vehicle (FZ1, FZ2) which is less than a predefined threshold.

2. Method according to Claim 1, **characterized in that** the precrash sensor or sensors (PS) emits/emit microwaves or lightwaves or ultrasonic waves.

3. Method according to one of the preceding claims, **characterized in that** the mass of the vehicle and/or the structure of the front part of the vehicle and/or the rigidity of the bodywork and/or the vehicle type and/or the vehicle speed are emitted as vehicle-specific data.

4. Method according to one of Claims 1 to 3, **characterized in that** the transmission signal or signals (SS) of the precrash sensor or sensors (PS) is/are frequency-modulated or amplitude-modulated or phase-modulated or pulse-width-modulated with the vehicle-specific data.

## Revendications

1. Procédé pour la détermination de données de commande pour le déclenchement d'organes de retenue dans un véhicule, selon lequel, avant une collision se produisant entre deux véhicules (FZ1, FZ2), chaque véhicule (FZ1, FZ2) émet des données relatives à des caractéristiques spécifiques à chaque véhicule pouvant avoir une influence sur le déroulement de la collision, dans lequel chaque véhicule (FZ1, FZ2) reçoit les données spécifiques émises par l'autre véhicule (FZ1, FZ2) et en tire des données de commande pour le déclenchement de ses organes de retenue (RH1,..., RHn), chaque véhicule (FZ1, FZ2) est équipé d'au moins un capteur de pré-collision (PS) se fondant sur le principe du radar, les données spécifiques à chaque véhicule (FZ1, FZ2) étant modulées sur le (les) signal (signaux) transmis par son (ses) capteur(s) de pré-collision (PS),
**caractérisé en ce que**
les données spécifiques à chaque véhicule modulées sur un signal transmis (SS) ne sont démodulées par un récepteur (E) que si le capteur de pré-collision (PS) recevant le signal transmis (SS) mesure une distance le séparant de l'autre véhicule (FZ1, FZ2) inférieure à un seuil prédéterminé.

2. Procédé selon la revendication 1,
**caractérisé en ce que**
le(s) capteur(s) de pré-collision (PS) émet (tent) des micro-ondes, des ondes lumineuses ou des ondes à ultrasons.

3. Procédé selon l'une des revendications précédentes,
**caractérisé en ce que**
les données émises spécifiques à chaque véhicule concernent la masse du véhicule et/ou la structure de l'avant et/ou la rigidité de la carrosserie et/ou le type de véhicule et/ou la vitesse du véhicule.

4. Procédé selon l'une des revendications 1 à 3,
**caractérisé en ce que**
le(s) signal (signaux) transmis (SS) par le (s) capteur(s) de pré-collision (PS) comportant les données spécifiques à chaque véhicule est (sont) modulé(s) en fréquence, ou en amplitude, ou en phase, ou en largeur d'impulsions.
